# EUROPEAN PATENT APPLICATION

(11) **EP 3 812 880 A1**
(43) Date of publication of application: **28.04.2021**
(21) Application number: 19818505.0
(22) Date of filing: 24.05.2019
(51) Int. Cl.: G06F 3/12, B41J 2/01, B41J 29/38, B41J 29/46

(54) **INKJET RECORDING DEVICE MANAGEMENT SYSTEM AND INKJET RECORDING DEVICE**

(30) Priority: 11.06.2018 JP 2018110897
(71) Applicant: HITACHI INDUSTRIAL EQUIPMENT SYSTEMS CO., LTD., Chiyoda-ku Tokyo 101-0022 (JP)
(72) Inventor: TAKAHASHI Takahiro, Tokyo 101-0022 (JP); KAWANO Takashi, Tokyo 101-0022 (JP)
(74) Representative: MERH-IP Matias Erny Reichl Hoffmann Patentanwälte PartG mbB
(86) International application number: PCT/JP2019/020708
(87) International publication number: WO 2019/239856

(57) **Abstract**

An inkjet recording device is connected to a database server holding various information (setting value data, operation information data, regular replacement component information, and consumable information) of the inkjet recording device and an AP server that calculates parameter information of the inkjet recording device from the various information of the inkjet recording device. The inkjet recording device receives the parameter information, calculated by the AP server, of the inkjet recording device, calculates running notice information (a date and time of the occurrence of an abnormality/alarm, an operable time, the number of times that printing has been performed before the occurrence of the abnormality/alarm, and maintenance information of a regular replacement component) of the inkjet recording device based on the parameter information, and displays the running notice information. This makes it possible to analyze setting data on the inkjet recording device, predict a time when an abnormality will occur, provide an alarm and a notice, and perform handling before a failure of the inkjet recording device.

## Description

### Technical Field

The present invention relates to an inkjet recording device management system and an inkjet recording device, and particularly to an inkjet recording device management system and an inkjet recording device that perform predictive diagnosis on an abnormality/alarm of the inkjet recording device and are suitable for making a warning for prediction of the abnormality/alarm.

### Background Art

An industrial inkjet recording device is a device that prints a production date and a serial number on a product and is widely used in a production line within a factory for mass production of products such as food and beverages. When an abnormality occurs in the inkjet recording device and printing cannot be performed on a product, the production line for the product needs to be stopped and the abnormality directly affects the number of products to be produced in the factory. Therefore, monitoring the inkjet recording device, appropriately managing a failure, and causing the inkjet recording device to constantly run are important issues.

For example, PTL 1 discloses a technique in which a personal computer acquires information on an operation from a control board of an inkjet printer and provides the information to a server and the server provides necessary control information to the personal computer in an inkjet printer system described in PTL 1. This makes it possible to remotely monitor the inkjet printer. When a failure such as an error occurs, the server is able to acquire details of the failure via a network and quickly analyze the acquired details.

### Citation List

### Patent Literature

PTL 1: Japanese Patent Application Laid-Open No. 2002-312134

### Summary of Invention

### Technical Problem

In the inkjet printer system described in PTL 1 of the foregoing conventional technique, information on errors such as damage to an electric board and damage to a driving system and history information are transmitted to the server, and a service center or the like is able to quickly solve the failures.

PTL 1, however, does not indicate a technique for analyzing setting data on an inkjet recording device, predicting a time when an abnormality will occur, providing an alarm and a notice, making it possible to perform handling before a failure of the inkjet recording device, reducing downtime of a production line of a factory, and improving maintainability, from the perspective of maintaining the production line of the factory.

In addition, PTL 1 does not indicate a technique for notifying, by an inkjet recording device, a predicted time when an abnormality/alarm will occur under a predetermined setting condition.

An object of the present invention is to provide an inkjet recording device management system that can analyze setting data on an inkjet recording device, predict a time when an abnormality will occur, provide an alarm and a notice, and improve maintainability.

### Solution to Problems

The inkjet recording device management system is preferably configured for an inkjet recording device connected to a network and able to communicate with an external device. The inkjet recording device is connected to a server that calculates parameter information of the inkjet recording device from various information received from the inkjet recording device and related to the inkjet recording device. The inkjet recording device receives the parameter information, calculated by the server, of the inkjet recording device, calculates running notice information of the inkjet recording device based on the parameter information, and displays the running notice information.

### Advantageous Effects of Invention

According to the present invention, it is possible to provide an inkjet recording device management system that can analyze setting data on an inkjet recording device, predict a time when an abnormality will occur, provide an alarm and a notice, and improve maintainability.

### Brief Description of Drawings

Figure 1 is a block diagram illustrating a configuration of an inkjet recording device management system according to a first embodiment.
Figure 2 is a block diagram illustrating a functional configuration of an inkjet recording device.
Figure 3 is a flowchart illustrating a data analysis process to be performed when an abnormality/alarm occurs.
Figure 4 is a flowchart illustrating a process of calculating running notice information of the inkjet recording device based on parameter information.
Figure 5 is a diagram illustrating an example of the parameter information.
Figure 6 is a diagram illustrating an abnormality/alarm notice information display parameter screen.
Figure 7 is a diagram illustrating an abnormality/alarm notice information display screen.
Figure 8 is a diagram illustrating a regular replacement component maintenance information display parameter screen.
Figure 9 is a diagram illustrating a regular replacement component maintenance information display screen.
Figure 10 is a block diagram illustrating a configuration of an inkjet recording device management system according to a second embodiment.

### Description of Embodiments

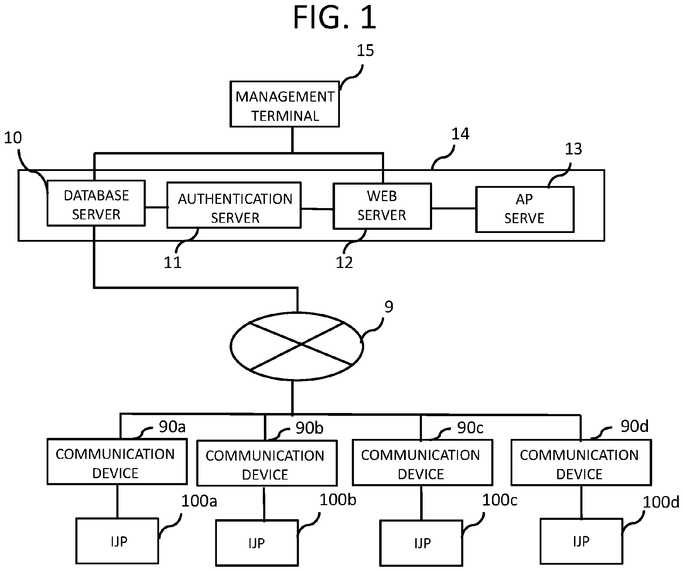

Hereinafter, embodiments of the present invention are described using Figures 1 to 10.

### [First Embodiment]

Hereinafter, a first embodiment of the present invention is described using Figures 1 to 9.

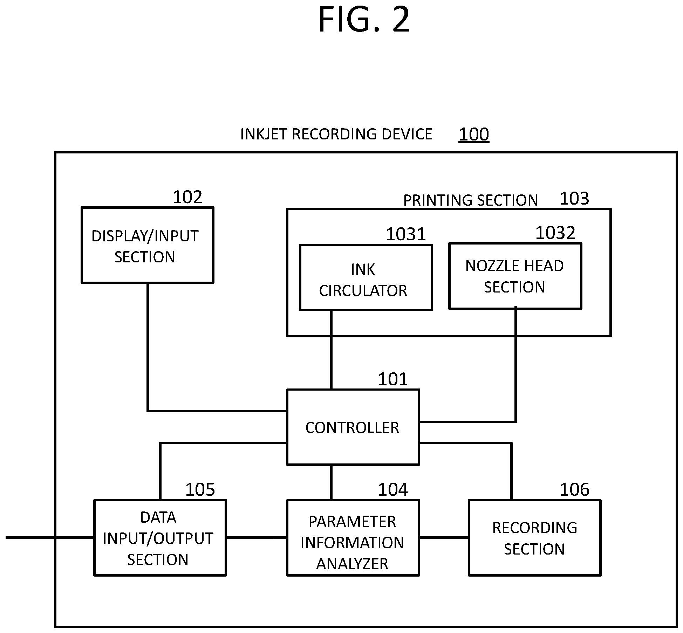

First, a configuration of an inkjet recording device management system according to the first embodiment is described using Figures 1 and 2.

As illustrated in Figure 1, in the inkjet recording device management system according to the first embodiment, a database server 10, an authentication server 11, a web server 12, and an APserver 13 are installed in a service center 14.

The database server 10 is a server that acquires various information (setting value data, operation information data on sleep states, operating states, abnormal stop states, and the like, regular replacement component information, and consumable information) of inkjet recording devices, accumulates the information as a database, and gives an access method to the other servers. The authentication server 11 is a server that performs access authentication on a network user, especially, on an administrator of the system in the present embodiment. The web server 12 is a server that provides a web page such as a management screen to a client terminal. The AP server 13 is a server that executes application software. Especially, in the present embodiment, the Ap server 13 has a function of executing system management application software for calculating parameter information from various information of the inkjet recording devices. In the AP server 13, the function is achieved by loading a program installed in a hard disk drive (HDD) into a main storage device and causing a central processing unit (CPU) to execute the program.

Although the plurality of servers installed in the service center 14 are illustrated, hardware may be achieved in the same device.

The servers are connected to a management terminal 15 via a network 9 such as the Internet or a public line (including a line connecting a modem and a relay station to each other via a cable or wirelessly). The management terminal 15 displays information including an operational state and related to an operation and sets a management parameter of the system. The management terminal 15 may be a dedicated terminal or an information processing device such as a general personal computer.

In addition, the plurality of inkjet recording devices 100 (represented as ink jet printers (IJPs) 100a, 100b, 100c, and 100d in Figure 1) are connected to the network 9 via communication devices 90 (represented as communication devices 90a, 90b, 90c, and 90d), respectively. The communication devices 90 may be network interface boards installed in the inkjet recording devices 100 or may be external network connection devices. Alternatively, the communication devices 90 may be wireless access point devices.

The inkjet recording devices regularly or irregularly transmit information (setting value data, operation information data on sleep states, operating states, abnormal stop states, and the like, regular replacement component information, and consumable information) including operational states of the inkjet recording devices and related to operations to the database server 10 via the communication devices 90a, 90b, 90c, and 90d. The setting value data and operation information data of each of the inkjet recording devices are classified into data on a state in which ink is normally ejected to enable printing, a sleep state in which ink is not ejected, a state in which an abnormality has occurred and the device is not able to operate, and the like. Current states of the devices and setting data of the devices are uploaded to the database server.

Next, a functional configuration of each of the inkjet recording devices is described using Figure 2.

As illustrated in Figure 2, each of the inkjet recording devices 100 is composed of a controller 101, a display/input section 102, a printing section 103, a parameter information analyzer 104, a data input/output section 105, and a recording section 106 as functional configurations.

The controller 101 is a functional section that controls the sections of the inkjet recording device 100. The display/input section 102 is a functional section that displays necessary information on a liquid crystal panel of the inkjet recording device 100 or the like and inputs necessary information while serving as a touch panel. The printing section 103 is composed of an ink circulator 1031 and a nozzle head section 1032. The ink circulator 1031 is a functional section that circulates ink from ink tanks of several types and supplies the ink to the nozzle head section 1032. The nozzle head section 1032 is a functional section that charges the ink by a charging electrode, changes the ink by a deflection electrode, and ejects the ink onto an object to be printed. The parameter information analyzer 104 (described later in detail) is a functional section that analyzes the parameter information received from the server and calculates running notice information of the inkjet recording device 100. The data input/output section 105 is a functional section that receives information from an external and outputs setting data to the external. The recording section 106 is a functional section that records information (setting value data, operation information data on a sleep state, an operating state, an abnormal stop state, and the like, regular replacement component information, and consumable information) including an operational state of the inkjet recording device 100 and related to an operation.

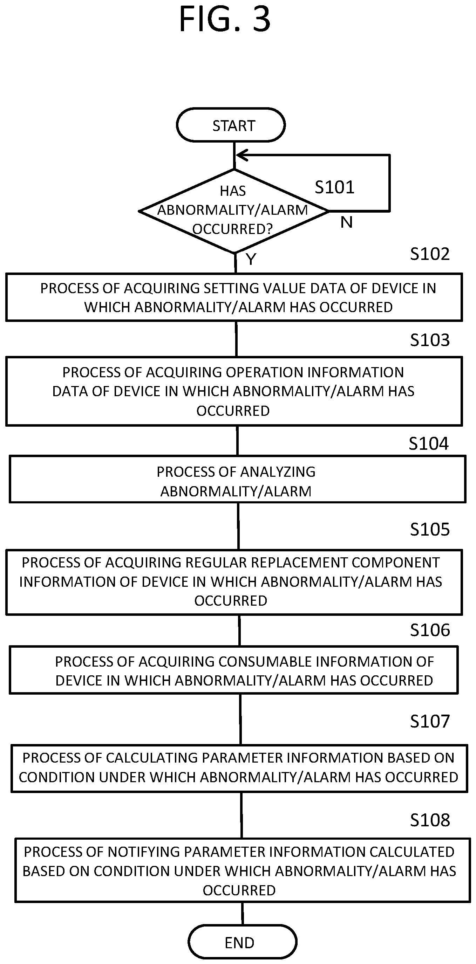

Next, a process of the inkjet recording device management system is described using Figures 3 to 5.

First, when an abnormality/alarm occurs in an inkjet recording device (Yes in S101), the controller 101 of the inkjet recording device notifies the-setting value data, the operation information data, the regular replacement component information, and the consumable information of the device to the database server 10 via the data input/output section 105.

The setting value data is data of ink viscosity, ink pressure, a deflection voltage, an excitation setting, an excitation frequency, and the like of the device in which the abnormality/alarm has occurred. The operation information data is device-specific data of an operating time, the number of times that printing has been performed, abnormality/alarm history information, and the like.

Next, the database server 10 acquires the setting value data (S102) and acquires the operation information data (S103).

Next, the system management application software of the AP server 13 is executed to perform an analysis process based on the setting value data and operation information data of the inkjet recording device in which the abnormality/alarm has occurred (S104). The analysis process analyzes a cause of the abnormality/alarm based on data of an abnormality history of the device, an operating time of the device, the number of times that printing has been performed, ink state management, and the like, a usage frequency of the device, and the like.

Next, the database server 10 acquires the regular replacement component information of a filter group of an ink filter, a collection filter, and the like, a pump group of a supply pump, an intensifier pump, and the like, an electromagnetic valve, and the like (S105).

Next, the database server 10 acquires the consumable information of ink, an intensifier, and the like (S106).

Next, the AP server 13 calculates parameter information to be distributed in each of the devices from a result of analyzing a condition under which the abnormality/alarm has occurred, based on the setting value data, the operation data, the regular replacement component information, and the consumable information of the inkjet recording device that have been acquired by the database server 10 in S102 to S106 (S107).

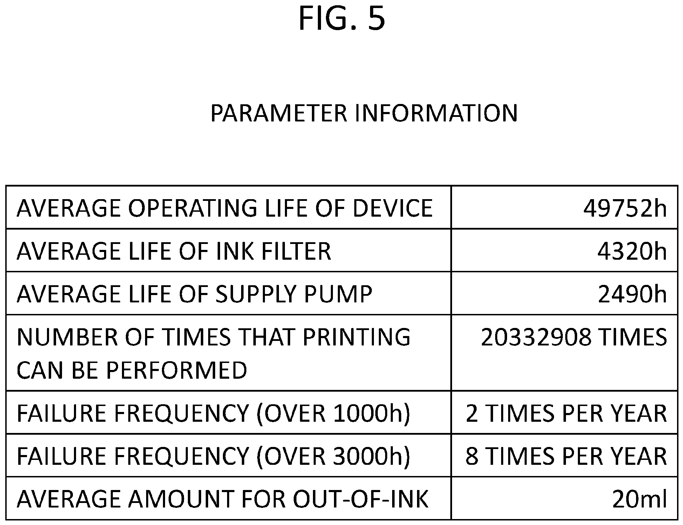

The parameter information is statistical information calculated from the inkjet recording device in which the abnormality/alarm has occurred, as illustrated in Figure 5. For example, the parameter information is information of average operating life of the device, average life of components that is average life of the ink filter and the like, a failure frequency, or the like.

Then, the AP server 13 notifies the parameter information calculated in S108 to the inkjet recording devices connected under a network environment (S108).

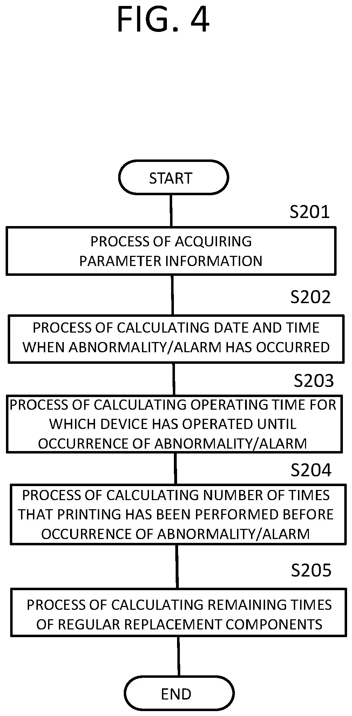

Figure 4 is a flowchart illustrating a process of calculating running notice information, such as a predicted time when an abnormality/alarm will occur, by the inkjet recording devices based on the parameter information of the result of the analysis by the AP server 13.

First, the inkjet recording devices acquire, from the AP server 13, the parameter information analyzed by the AP server 13 based on data of the inkjet recording device in which the abnormality/alarm has occurred (S201). Each of the inkjet recording devices calculates a date and time when the abnormality/alarm has occurred, based on the acquired parameter information and information (current operating time, the number of times that printing has been performed, states of ink and an intensifier, an abnormality/alarm occurrence history, replacement states of components, and the like) of a state of the inkjet recording device (S202).

Next, the inkjet recording device calculates, based on the information calculated in S202, an operating time for which the inkjet recording device has operated until the occurrence of the abnormality/alarm (S203). In this case, an operable time of the device is calculated by subtracting a current operating time from an operating time at a predicted time when an abnormality/alarm will occur.

Next, the inkjet recording device calculates the number of times that printing has been performed before the occurrence of the abnormality/alarm (S204).

Next, the inkjet recording device calculates remaining usage times of regular replacement components as maintenance information of the regular replacement components based on information of the state of the inkjet recording device and the date and time when the abnormality/alarm has occurred (S205).

This makes it possible to perform device maintenance and reduce downtime caused by the occurrence of the abnormality/alarm by-displaying, on each inkjet recording device, an operable time and the number of times that printing can be performed, and prompting a user to perform the maintenance.

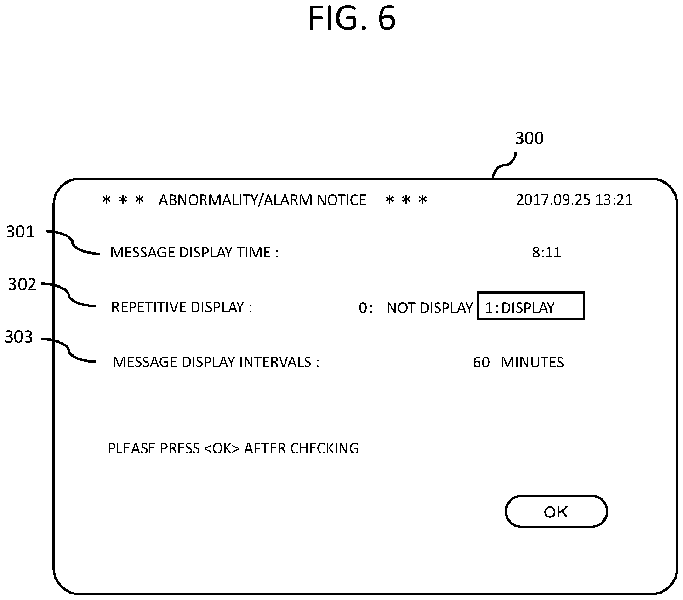

Next, a user interface provided in each of the inkjet recording devices is described using Figures 6 to 9.

Figures 6 to 9 illustrate screens displayed on the liquid crystal panel of the display/input section 102 of the inkjet recording device. The user can input necessary data via the touch panel.

An abnormality/alarm notice information display parameter screen 300 is a screen for setting a parameter related to displaying of abnormal/alarm notice information. As illustrated in Figure 6, the abnormality/alarm notice information display parameter screen 300 is composed of a message display time setting field 301, a repetitive display setting field 302, and a message display interval setting field 303.

The message display time setting field 301 is a field in which a time when an abnormality/alarm notice information display message is displayed is set. The repetitive display setting field 302 is a field in which whether or not the message is repeatedly displayed at fixed time intervals is set. The message display interval setting field 303 is a field in which whether or not the message is displayed every minute is set when the repetitive display is performed.

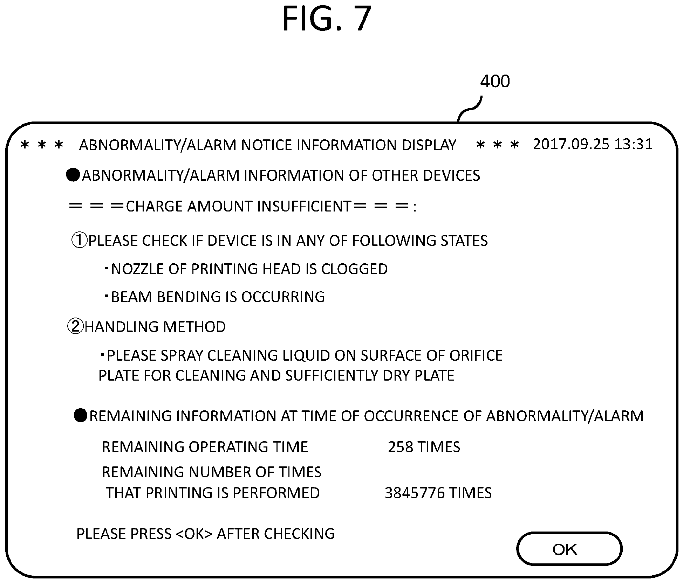

An abnormality/alarm notice information display screen 400 is a screen for displaying an abnormality or warning notice information on the inkjet recording device in accordance with settings on the abnormality/alarm notice information display parameter screen 300. As illustrated in Figure 7, for example, abnormality/alarm information 401 of the other devices, and remaining information 402 at the time of the occurrence of the abnormality/alarm, are displayed. In an example illustrated in Figure 7, "charge amount insufficient" is displayed as the abnormality/alarm information 401 of the other devices as an example of a case where an abnormality has occurred, and a predicted cause of abnormality information caused at that time and a handling method are illustrated. In addition, as the remaining information 402 at the time of the occurrence of the abnormality/alarm, information that is predicted based on the abnormality/alarm information of the other devices and indicates a remaining operating time at the time of the occurrence of the abnormality/alarm and a remaining number of times that the printing is per formed at the time of the occurrence of the abnormality/alarm is displayed.

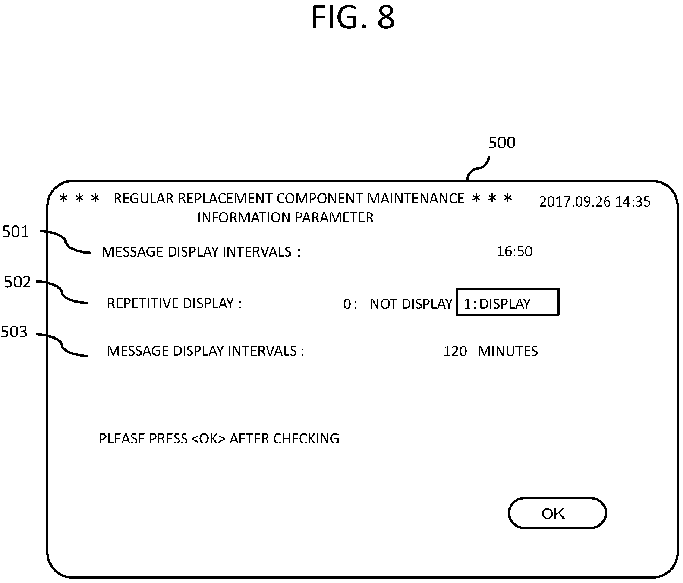

A regular replacement component maintenance information display parameter screen 500 is a screen for setting a parameter related to displaying of regular replacement component maintenance information. As illustrated in Figure 8, the regular replacement component maintenance information display parameter screen 500 is composed of a message display time setting field 501, a repetitive display setting field 502, and a message display interval setting field 503.

The message display time setting field 501 is a field in which a time when a regular replacement component maintenance information display message is displayed is set The repetitive display setting field 502 is a field in which whether or not the message is repeatedly displayed at fixed time intervals is set. The message display interval setting field 503 is a field in which whether or not the message is displayed every minute is set when the repetitive display is performed.

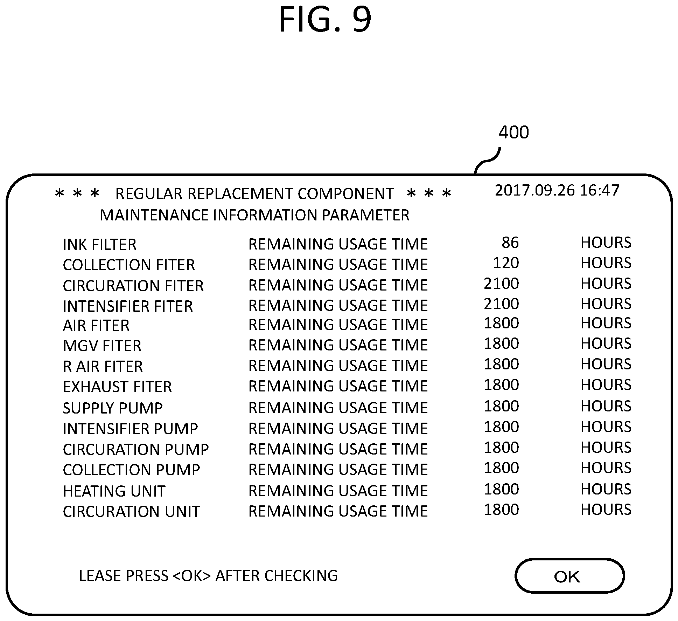

A regular replacement component maintenance information display screen 600 is a screen for displaying maintenance information of regular replacement components in accordance with settings of the regular replacement component maintenance information display parameter screen 500. As illustrated in Figure 9, the regular replacement component maintenance information display screen 600 is a screen for prompting the user to perform replacement by displaying predicted remaining usable times of the regular replacement components.

According to the present embodiment, the servers collect the information including the operational states of the inkjet recording devices and related to the operations, calculate the parameter information, and transmit the parameter information to the inkjet recording devices, and the inkjet recording devices calculate the running notice information such as a predicted time when an abnormality/alarm will occur. Therefore, since the information is calculated based on various data of an inkjet recording device in which a failure has actually occurred, it is possible to display a reliable abnormality/alarm notice, times when regular components are to be replaced, and the like, and reduce system down such as stop of a production line by appropriate handling performed by a maintenance person.

### [Second Embodiment]

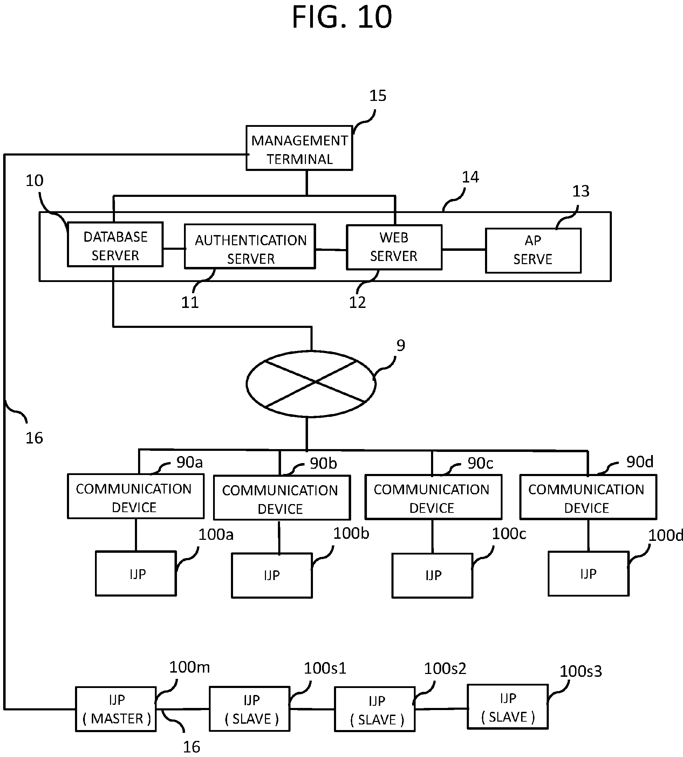

Hereinafter, a second embodiment of the present invention is described using Figure 10.

As illustrated in Figure 10, an inkjet recording device management system according to the present embodiment has a configuration in which the database server 10, the authentication server 11, the web server 12, and the AP server 13 are installed in the service center 14 in the same manner as the first embodiment. In the present embodiment, a process of regularly or irregularly uploading, by the inkjet recording devices 100, information (setting value data and operation information data, such as sleep states, operating states, and abnormal stop states) including operational states of the inkjet recording devices 100 and related to operations to the database server 10 via the communication devices 90, and a process of calculating parameter information by the AP server 13 via the data analysis process performed at the time of the occurrence of an abnormality/alarm and described using Figure 3 in the first embodiment are the same as described above.

In the present embodiment, the management terminal 15 serving as a high-level device is connected to an inkjet recording device 100m serving as a master via a serial communication cable 16, and the inkjet recording device 100m is connected to inkjet recording devices 100s1, 100s2, and 100s3 serving as slaves and forming a chain.

The management terminal 15 acquires the parameter information calculated by the AP server 13 in the data analysis process performed at the time of the occurrence of the abnormality/alarm and illustrated in Figure 3, and notifies the parameter information to the inkjet recording device 100m serving as the master.

As illustrated in Figure 4, the inkjet recording device 100m calculates running notice information of the inkjet recording device based on the parameter information. The inkjet recording device 100m sequentially notifies a result of calculating the running notice information to the inkjet recording devices 100s1, 100s2, and 100s3 serving as the slaves via a serial communication cable.

Therefore, only the calculation of the running notice information of the inkjet recording devices by the inkjet recording device 100m serving as the master makes it possible to display the running notice information of the inkjet recording devices on the same inkjet recording devices serving as the slaves under similar usage conditions, such as printing frequencies, efficiently display the running notice information of the inkjet recording devices without applying a load to the inkjet recording devices serving as the slaves, and expect a reduction in downtime of the entire system.

In addition, the present embodiment describes the example in which the devices are connected via the serial communication cable, but is not limited to this. The present embodiment may be applied to another connection configuration, such as parallel connection or network connection.

### Reference Signs List

9... network, 16... serial communication cable, 10... database server, 11... authentication server, 12... web server, 13... AP server, 14... service center, 100, 100a, 100b, 100c, 100d, 100m, 100s1, 100s2, 100s3... inkjet recording device, 90, 90a, 90b, 90c, 90d... communication device

## Claims

1. An inkjet recording device management system for an inkjet recording device connected to a network and able to communicate with an external device,
wherein the inkjet recording device is connected to a server that calculates parameter information of the inkjet recording device from various information received from the inkjet recording device and related to the inkjet recording device, and
the inkjet recording device receives the parameter information, calculated by the server, of the inkjet recording device,- calculates- running notice information of the inkjet recording device based on the parameter information, and displays the running notice information.

2. The inkjet recording device management system according to claim 1,
wherein the various information of the inkjet recording device is setting value data, operation information data, regular replacement component information, and consumable information.

3. The inkjet recording device management system according to claim 1,
wherein the running notice information is a date and time of the occurrence of an abnormality/alarm, an operable time, and the number of times that printing has been performed before the occurrence of the abnormality/alarm.

4. The inkjet recording device management system according to claim 1,
wherein the running notice information includes maintenance information of a regular replacement component.

5. The inkjet recording device management system according to claim 1,
wherein the running notice information is displayed in accordance with a time based on a set display parameter, the number of iterations, and a display interval.

6. The inkjet recording device management system according to claim 1, further comprising:
a management terminal;
an inkjet recording device serving as a master; and
an inkjet recording device serving as a slave,
wherein the management terminal and the inkjet recording device serving as the master are connected to each other via a communication cable,
the inkjet recording device serving as the master and the inkjet recording device serving as the slave are connected to each other via a communication cable,
the management terminal receives the parameter information, calculated by the server, of the inkjet recording device and transmits the parameter information to the inkjet recording device serving as the master, and
the inkjet recording device serving as the master calculates running notice information of the inkjet recording device based on the received parameter information and transmits the running notice information to the inkjet recording device serving as the slave.

7. The - inkjet recording device management system according to claim 6,
wherein when an inkjet recording device serving as a first slave receives, from the inkjet recording device serving as the master or an inkjet recording device serving as a second slave, running notice information of the inkjet recording device, the inkjet recording device serving as the first slave transmits the running notice information of the inkjet recording device to an inkjet recording device serving as a third slave.

8. An inkjet recording device connected to a network and able to communicate with an external device,
wherein the inkjet recording device is connected to a server that calculates parameter information of the inkjet recording device from various information received from the inkjet recording device and related to the inkjet recording device,
the inkjet recording device comprises:
a data input/output section that receives and outputs data from and to an external;
a recording section that records various information of the inkjet recording device;
a parameter information analyzer; and
a display/input section,
the parameter information analyzer calculates running notice information of the inkjet recording device based on the received parameter information, and
the display/input section displays the running notice information.

9. The inkjet recording device according to claim 8,
wherein the inkjet recording device is composed of an inkjet recording device serving as a master and an inkjet recording device serving as a slave,
the inkjet recording device serving as the master and the inkjet recording device serving as the slave are connected to each other via a communication cable,
the management terminal receives the parameter information, calculated by the server, of the inkjet recording device and transmits the parameter information to the inkjet recording device serving as the master, and
the inkjet recording device serving as the master receives the parameter information, calculated by the server, of the inkjet recording device, calculates running notice information of the inkjet recording device based on the parameter information, and transmits the running notice information to the inkjet recording device serving as the slave.

10. The inkjet recording device according to claim 9,
wherein when an inkjet recording device serving as a first slave receives, from the inkjet recording device serving as the master or an inkjet recording device serving as a second slave, running notice information of the inkjet recording device, the inkjet recording device serving as the first slave transmits the running notice information of the inkjet recording device to an inkjet recording device serving as a third slave.
